# EUROPÄISCHE PATENTANMELDUNG

(11) **EP 4 364 885 A1**
(43) Veröffentlichungstag der Anmeldung: **08.05.2024**
(21) Anmeldenummer: 23000146.3
(22) Anmeldetag: 02.11.2023
(51) Int. Cl.: B23Q 11/00

(54) **ABSAUGVORRICHTUNG**

(30) Priorität: 04.11.2022 DE 102022004179
(71) Anmelder: Producteers International GmbH, 73614 Schorndorf (DE)
(72) Erfinder: Krogsgaard, Holger, 73614 Schorndorf (DE)
(74) Vertreter: Kohl, Karl-Heinz

(57) **Zusammenfassung**

Die Absaugvorrichtung dient beim Arbeiten mittels eines Werkzeuges in Mauerwerken zum Absaugen von anfallendem Material. Sie hat wenigstens einen Unterdruckraum (11), wenigstens einen Arbeitsraum (15) und einen Anschluss (5) für eine Saugeinheit, von denen der Arbeitsraum (15) von einer Wandung (3, 12, 16) begrenzt ist. Um mit der Absaugvorrichtung bei einfacher Ausbildung das beim Arbeiten mit unterschiedlichen Werkzeugen anfallende Material jederzeit zuverlässig absaugen zu können, weist die den Arbeitsraum begrenzende Wandung (3, 12, 16) wenigstens einen Wandabschnitt (16) auf, der in eine den Arbeitsraum (15) öffnende Stellung verstellbar ist.

## Beschreibung

Die Erfindung betrifft eine Absaugvorrichtung nach dem Oberbegriff des Anspruches 1.

Es sind Absaugvorrichtungen bekannt, mit denen beim Bohren im Mauerwerk anfallendes Bohrgut an der Bohrstelle abgesaugt wird, damit es nicht auf den Boden fällt. Die Absaugvorrichtung ist über einen Absaugschlauch mit der Saugeinheit verbunden, mit der das Bohrgut von der Bohrstelle abgesaugt wird. Im Unterdruckraum entsteht ein Unterdruck, der dafür sorgt, dass die Absaugvorrichtung gegen das Mauerwerk gezogen wird.

Da bei einem Bohrwerkzeug der Bohrer seine Lage relativ zur Absaugvorrichtung während des Bohrvorganges nicht ändert, lässt sich das Bohrgut sehr einfach absaugen. Es sind aber auch Werkzeuge bekannt, wie beispielsweise Schlitzwerkzeuge, mit denen beispielsweise Schlitze im Mauerwerk angebracht werden. Hierbei bewegt sich das Bohrwerkzeug relativ zur Absaugvorrichtung, so dass es schwierig ist, das beim Schlitzen anfallende Material abzufangen und zu entfernen.

Der Erfindung liegt daher die Aufgabe zugrunde, die gattungsgemäße Absaugvorrichtung so auszubilden, dass bei einfacher Ausbildung das beim Arbeiten mit dem Werkzeug anfallende Material jederzeit zuverlässig abgesaugt werden kann.

Diese Aufgabe wird bei der gattungsgemäßen Absaugvorrichtung erfindungsgemäß mit den kennzeichnenden Merkmalen des Anspruches 1 gelöst.

Bei der erfindungsgemäßen Absaugvorrichtung ist die den Arbeitsraum begrenzende Wandung mit wenigstens einem in eine Öffnungsstellung verstellbaren Wandabschnitt versehen. Er kann, wenn mit einem Werkzeug gearbeitet werden soll, das während des Bearbeitungsvorganges relativ zur Absaugvorrichtung verstellt werden muss, in seine Offenstellung geschwenkt werden, so dass der Arbeitsraum geöffnet wird. Das beim Arbeiten mit einem solchen Werkzeug anfallende Material kann daher durch die freigegebene Öffnung über den Anschluss von der Saugeinheit abgesaugt werden.

Wird das Werkzeug während des Bearbeitungsvorganges nicht relativ zur Absaugvorrichtung bewegt, dann verbleibt der Wandabschnitt in seiner Schließstellung, so dass der Arbeitsraum umfangsseitig geschlossen ist.

Vorteilhaft ist der Wandabschnitt um eine Achse schwenkbar gelagert. Darum kann der Wandabschnitt sehr einfach aus seiner Schließ- in seine Offenstellung und umgekehrt verstellt werden. Die Anlenkung des Wandabschnittes hat weiter den Vorteil, dass der Wandabschnitt stets zur Verfügung steht und nicht verloren gehen kann.

Zu einer kompakten und einfachen Ausbildung der Absaugvorrichtung trägt bei, wenn der verstellbare Wandabschnitt und der Anschluss für die Saugeinheit an einander gegenüberliegenden Seiten eines Gehäuses der Absaugvorrichtung angeordnet sind.

Bei einer vorteilhaften Ausführungsform ist zwischen dem Unterdruckraum und dem Arbeitsraum eine Querwand angeordnet, in der sich wenigstens eine Öffnung befindet, die den Arbeitsraum mit dem Anschluss verbindet. Durch die Öffnung wird das beim Arbeiten mit dem Werkzeug anfallende Material durch die Saugeinheit in den Anschluss abgesaugt, der mit der Öffnung strömungsverbunden ist.

Die Querwand liegt, bezogen auf die Längsrichtung des Gehäuses, dem verstellbaren Wandabschnitt vorteilhaft gegenüber.

Eine besonders vorteilhafte Ausbildung ergibt sich, wenn die Absaugvorrichtung zwei gegensinnig verstellbare Wandabschnitte aufweist. Sie sind vorteilhaft unabhängig voneinander in die Offenstellung verstellbar, so dass wahlweise nur ein Wandabschnitt oder beide Wandabschnitte in die Offenstellung verstellt werden können. Da die Wandabschnitte gegensinnig zueinander verstellbar sind, ergibt sich ein großer Einlassbereich für das beim Bearbeiten anfallende Material, das von der großen Öffnung in der Wandung des Arbeitsrohraumes zuverlässig aufgefangen und abgesaugt werden kann.

Die beiden Wandabschnitte sind in vorteilhafter Weise gegensinnig zueinander um jeweils eine Achse schwenkbar. Dadurch können die beiden Wandabschnitte jeweils gezielt in die Offenstellung verstellt werden.

Eine besonders vorteilhafte Ausbildung ergibt sich, wenn der verstellbare Wandabschnitt über seine Länge gekrümmt ausgebildet ist. Eine solche Ausbildung ist besonders dann von Vorteil, wenn die Absaugvorrichtung an einer senkrechten Wand eingesetzt wird, an der das Werkzeug arbeitet. Das in diesem Fall nach unten fallende Material gelangt auf den gekrümmten Wandabschnitt, der infolge seiner Krümmung das Material in Richtung auf den Arbeitsraum leitet, wo es sicher abgesaugt werden kann.

Der Wandabschnitt ist in vorteilhafter Weise mit einem Seitenrand schwenkbar gelagert. Dadurch kann der Wandabschnitt bei geringem Schwenkweg eine sehr große Öffnung freigeben.

In dem Falle, in dem die Absaugvorrichtung mit den beiden Wandabschnitten versehen ist, liegen diese in ihrer den Arbeitsraum schließenden Stellung mit ihren Stirnseiten aneinander. Dadurch wird der Arbeitsraum im Bereich der Wandabschnitte einwandfrei geschlossen.

Der Arbeitsraum und der Unterdruckraum sind an der Unterseite des Gehäuses bevorzugt offen.

Hierbei ist es vorteilhaft, wenn die den Arbeitsraum und den Unterdruckraum begrenzenden Seitenwände am freien Rand mit Dichtelementen versehen sind. Sie sorgen dafür, dass das im Arbeitsraum anfallende Material nicht nach außen gelangt und im Unterdruckraum der Unterdruck erzeugt werden kann, durch den die Absaugvorrichtung gegen die jeweilige Arbeitsfläche gezogen wird.

Bevorzugt ist das Gehäuse spiegelsymmetrisch zu seiner Längsmittelebene ausgebildet.

Um den Unterdruck im Unterdruckraum in einfacher Weise zu erzeugen, ist der Anschluss in vorteilhafter Weise über wenigstens eine Öffnung mit dem Unterdruckraum verbunden. Die im Unterdruckraum befindliche Luft kann daher über die Öffnung des Anschlusses abgesaugt werden, während die Dichtelemente dafür sorgen, dass von außen keine Außenluft in den Unterdruckraum gelangen kann.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in perspektivischer Darstellung eine erfindungsgemäße Absaugvorrichtung mit angeschlossenem Saugschlauch,
- Fig. 2: die erfindungsgemäße Absaugvorrichtung 1 ohne Saugschlauch,
- Fig. 3: in perspektivischer Darstellung eine Unteransicht der erfindungsgemäßen Absaugvorrichtung,
- Fig. 4: eine Draufsicht auf die erfindungsgemäße Absaugvorrichtung,
- Fig. 5: eine Draufsicht auf die erfindungsgemäße Absaugvorrichtung in einer zweiten Betriebsstellung,
- Fig. 6: in vergrößerter Darstellung einen Schnitt längs der A-A in Fig. 4,
- Fig.7: in perspektivischer Darstellung die erfindungsgemäße Absaugvorrichtung in einer Arbeitsstellung.

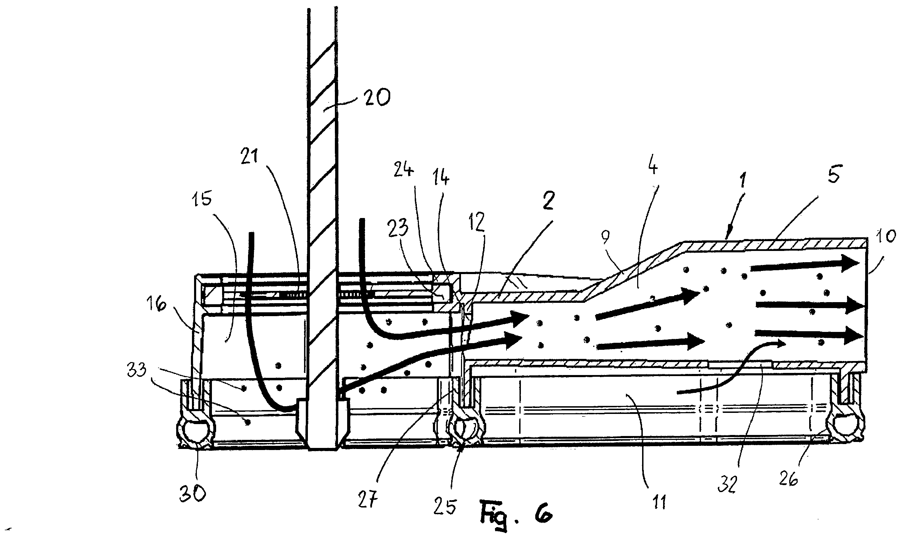

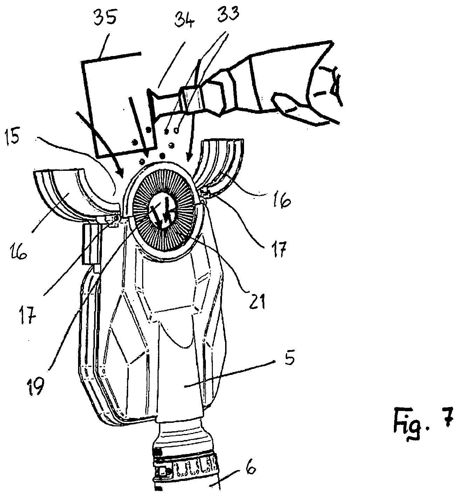

Die Absaugvorrichtung dient dazu, beim Arbeiten mit einem Werkzeug den entstehenden Abfall direkt am Arbeitsort abzusaugen. Als Werkzeuge sind beispielhaft ein Bohrwerkzeug (Fig. 6) und ein Schneidwerkzeug (Fig. 7) dargestellt. Auf diese beiden unterschiedlichen Werkzeuge ist die Erfindung aber nicht beschränkt.

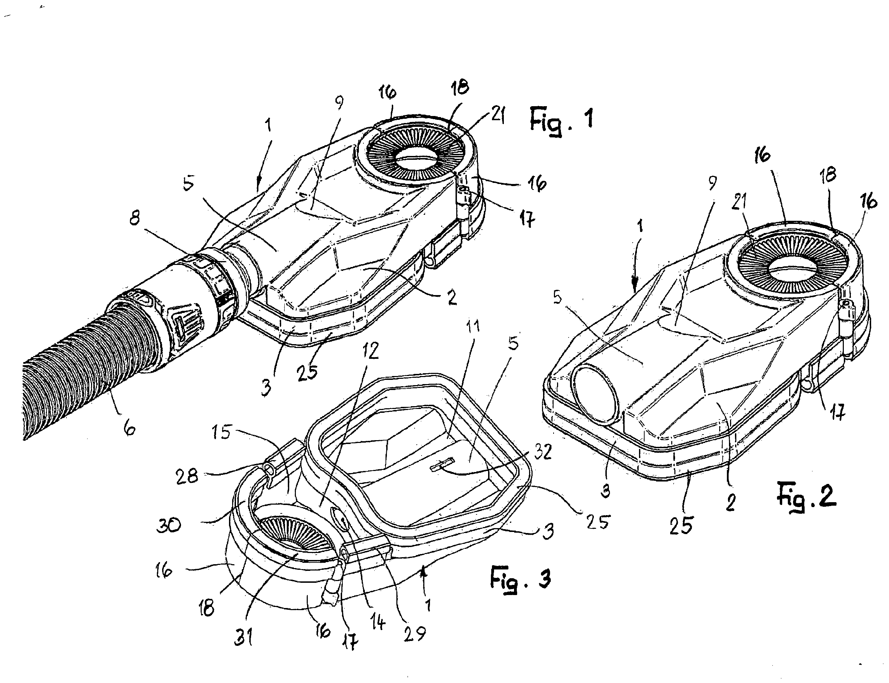

Die Absaugvorrichtung hat ein Gehäuse 1, das an der Unterseite offen ist (Fig. 3). Das Gehäuse 1 hat in Draufsicht etwa Trapezform, d.h. es verjüngt sich von einem Ende aus in Richtung auf sein anderes Ende.

Das Gehäuse hat eine Decke 2, an deren Rand winklig, vorzugsweise rechtwinklig, eine umlaufende Seitenwand 3 anschließt.

An seinem breiteren Ende ist das Gehäuse 1 mit einem Anschlussstutzen 5 für einen Saugschlauch 6 versehen, der mit einem (nicht dargestellten) Sauggerät verbunden ist und mit dem das beim Bearbeiten mit dem Werkzeug entstehende Gut in noch zu beschreibender Weise abgesaugt wird.

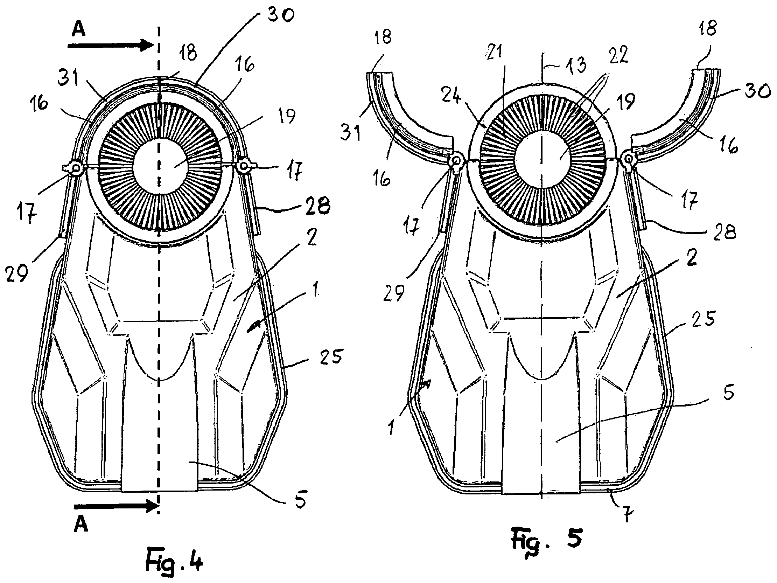

Der Anschlussstutzen 5, der mit einem Strömungsraum 4 versehen ist (Fig. 6), ist vorteilhaft einstückig mit der Decke 2 ausgebildet und so vorgesehen, dass er in halber Breite des Gehäuses 1 angeordnet ist (Fig. 4 und 5). Der Anschlussstutzen 5 ist so am Gehäuse 1 vorgesehen, dass er nicht über dessen breitere Stirnseite 7 vorsteht (Fig. 4 und 5). Wie aus den Fig. 2 und 6 hervorgeht, ist der obere Teil des Anschlussstutzens 5 durch eine entsprechende, im Querschnitt teilkreisförmige Ausbauchung der Decke 2 gebildet. Gemäß Fig. 2 hat der Anschlussstutzen 5 zumindest im Anschlussbereich des Saugschlauches 6 kreisförmigen Innenquerschnitt.

Der Saugschlauch 6 wird mit einem entsprechenden zylindrischen Anschlussstück 8 in den Anschlussstutzen 5 gesteckt und dort in geeigneter Weise gehalten bzw. gesichert.

Mit Abstand vom freien Ende des Anschlussstutzens 5 ist der obere Wandungsteil mit einer Abschrägung 9 versehen (Fig. 1 und 2), die sich über den Durchmesser des Anschlussstutzens 5 erstreckt.

Die Abschrägung 9 führt dazu, dass der Strömungsquerschnitt des Strömungsraumes 4 in Strömungsrichtung der Schmutzluft zunimmt (Fig. 6). Im Eintrittsbereich der Schmutzluft hat der Strömungsraum 4 seinen kleinsten Strömungsquerschnitt. Im Bereich der Abschrägung 9 nimmt der Strömungsquerschnitt stetig zu, bis er in einen Bereich mit konstantem Strömungsquerschnitt übergeht. Er erstreckt sich bis zum Einsteckende 10 des Anschlussstutzens 5.

Der Anschlussstutzen 5 ragt, wie Fig. 3 zeigt, nach unten in einen Unterdruckraum 11, der von einem Teil der Seitenwand 3 des Gehäuses 1 sowie einer Querwand 12 begrenzt ist, die sich quer, vorzugsweise etwa senkrecht zur Längssymmetrieebene 13 (Fig. 5) des Gehäuses 1 erstreckt und einander gegenüberliegende Bereiche der Gehäuseseitenwand 3 miteinander verbindet.

Der Unterdruckraum 11 ist zur Unterseite des Gehäuses 1 offen.

Der Anschlussstutzen 5 schließt an die Querwand 12 an, mit der er vorteilhaft einstückig ausgebildet ist. Auch die Querwand 12 ihrerseits ist in vorteilhafter Weise einstückig mit der Seitenwand 3 des Gehäuses 1 ausgebildet.

Die Querwand 12 erstreckt sich von der Decke 2 aus, mit der er ebenfalls vorteilhaft einstückig ausgebildet ist. Die freien Enden der Seitenwand 3 und der Querwand 12 liegen in einer gemeinsamen Ebene.

Die Querwand 12 ist mit einer Öffnung 14 versehen (Fig.3 und 6), über die die abzusaugende Schmutzluft in den Anschlussstutzen 5 strömen kann. Der Querschnitt der Öffnung 14 ist ausreichend groß, so dass das beim Arbeiten mit dem jeweiligen Werkzeug anfallende Material zuverlässig abgesaugt werden können.

Die Querwand 12 trennt den Unterdruckraum 11 von einem Arbeitsraum 15, der am schmaleren Ende des Gehäuses 1 vorgesehen ist und der wie der Unterdruckraum 11 zur Gehäuseunterseite offen ist.

Der Arbeitsraum 15 verjüngt sich in Richtung auf das schmale Gehäuseende, an dem der Arbeitsraum 15 von wenigstens einem verstellbaren Wandabschnitt 16 begrenzt wird. Im Ausführungsbeispiel sind zwei Wandabschnitte 16 vorgesehen, die um jeweils eine Achse 17 aus einer Schließstellung gemäß Fig. 4 in eine Offenstellung gemäß Fig 5 geschwenkt werden können. Die Schwenkachsen 17 erstrecken sich in Höhenrichtung des Gehäuses 1.

In der Schließstellung gemäß Fig. 4 schließen die Wandabschnitte 16 mit ihren Stirnseiten 18 aneinander. In dieser Schließstellung können die Wandabschnitte 16 beispielsweise durch Magnetkräfte gehalten sein, mit denen die Wandabschnitte 16 fest mit ihren Stirnseiten 18 gegeneinander gedrückt werden. Es können auch andere Haltemöglichkeiten eingesetzt werden, beispielsweise Verrastungen, Clips-Verbindungen und dgl.

Die beiden Wandabschnitte 16 sind beispielhaft teilkreisförmig gekrümmt ausgebildet und bilden in der Schließstellung (Fig. 4) einen geschlossenen, etwa über 180° sich erstreckenden Stirnabschnitt der Seitenwand 3.

Beide Wandabschnitte 16 sind mit ihren einander zugewandten Seitenrändern mit den Schwenkachsen 17 verbunden.

Im Anschluss an die Schwenkachsen 17 verlaufen die einander gegenüber- liegenden Bereiche der Seitenwand 3 divergierend, bis sie etwa in Höhe des Anschlussstutzens 5 in zueinander konvergierende Seitenwandabschnitte übergehen, die sich bis zur Stirnseite 7 des Gehäuses 1 erstrecken, die quer, im Ausführungsbeispiel senkrecht zur Längssymmetrieebene 13 des Gehäuses verläuft.

Die beschriebene Umrissform des Gehäuses 1 ist nur beispielhaft zu verstehen. Selbstverständlich kann das Gehäuse auch jede andere geeignete Umrissform haben.

Die beiden Wandabschnitte 16 verschließen in der Schließstellung gemäß Fig. 4 den Arbeitsraum 15 stirnseitig, so dass dieser Arbeitsraum von diesen Wandabschnitten 16 und den an diese Wandabschnitte anschließenden Bereichen der Seitenwand 3 und der Querwand 12 umfangsseitig begrenzt wird.

Im Deckenbereich des Arbeitsraumes 15 befindet sich ein Durchgang 19, durch welchen ein Werkzeug 20 gesteckt werden kann, das im Ausführungsbeispiel (Fig. 6) ein Bohrer ist, mit dem eine Bohrung in einer Wand eingebracht werden kann. Der Durchgang 19 ist an einem ringscheibenförmigen Dichtteil 21 vorgesehen, das aus einzelnen Zungen 22 besteht, die von einem Außenring 23 (Fig. 6) radial nach innen abstehen und elastisch biegbar sind. Die Zungen 22 begrenzen mit ihren radial inneren Enden den Durchgang 19, dessen Durchmesser vorteilhaft so gewählt ist, dass die Zungen beim Durchstecken des Werkzeuges 20 elastisch gebogen werden und unter elastischer Verformung am Werkzeug 20 anliegen. Das Dichtteil 21 verhindert, dass der beim Bohren anfallende Bohrstaub aus dem Arbeitsraum 15 nach außen tritt.

Das Dichtteil 21 bzw. sein Außenring 23 ist in einem Haltering 24 aufgenommen, der vorteilhaft einstückig mit der Decke 2 des Gehäuses 1 ausgebildet ist. Der Haltering 24 umgibt den Außenring 23 über den gesamten Umfang.

Der Haltering 24 mit dem Dichtteil 21 bildet den Deckenbereich des Arbeitsraumes 15.

Das Dichtteil 21 kann auch andere Ausbildungen haben. So kann es beispielsweise eine elastisch verformbare Scheibe mit einer zentralen Öffnung für den Bohrer 20 sein. Die Öffnung hat vorteilhaft einen Durchmesser, der kleiner ist als der Außendurchmesser des Bohrerschaftes. Dann liegt der Rand der Öffnung unter elastischer Verformung dichtend am Bohrerschaft an.

Eine Abdichtung des Bohrerschaftes ist nicht zwingend. Wenn der vom Sauggerät erzeugte Saugstrom entsprechend stark ist, wird das anfallende Bohrgut zuverlässig abgesaugt.

Sind die Wandabschnitte 16 in die Offenstellung weggeklappt (Fig. 5), ragt der Haltering 24 mit dem Dichtteil 21 etwa über den halben Durchmesser über die Schwenkachsen 17 vor. Das Dichtteil 21 wird im Haltering 24 auch in der Offenstellung des Gehäuses 1 zuverlässig gehalten. Die beiden Schwenkachsen 17 liegen, bezogen auf den Haltering 24, diametral einander gegenüber.

Auf den freien Rand der Querwand 12 und den anschließenden Bereich der Seitenwand 3 ist ein Dichtring 25 aufgesetzt (Fig. 3 und 6), der ein als Hohlkörper ausgebildetes Dichtelement 26 aufweist, das beim Einsatz der Absaugvorrichtung in noch zu beschreibender Weise elastisch verformt wird, wenn die Absaugvorrichtung an eine Wand oder dgl. angedrückt wird.

Wie aus Fig. 6 hervorgeht, hat der Dichtring 25, der auf die Querwand 12 und auf die angrenzenden freien Enden der Seitenwandbereiche einschließlich der Stirnseite 7 aufgesetzt ist, einen u-förmigen Profilteil 27, zwischen dessen Schenkel die freien Enden der Seitenwand 3 und der Querwand 12 ragen. Der Dichtring 25 kann an der Seitenwand 3 und an der Querwand 12 in geeigneter Weise befestigt sein. Bei entsprechender Ausbildung des Profilteiles 27 reicht es aus, den Dichtring 25 auf den freien Rand der Seitenwand 3 und der Querwand 12 so aufzustecken, dass die Schenkel des u-förmigen Profilteiles 27 elastisch verformt werden und dadurch einen sicheren Sitz des Dichtringes 25 gewährleisten. Das hohlfömige Dichtelement 26 stellt sicher, dass auch bei einer unebenen Anlagefläche eine einwandfreie Abdichtung erreicht wird.

Auch der Arbeitsraum 15 ist durch Dichtelemente in der Arbeitslage weitgehend abgedichtet. Fig. 3 zeigt, dass auf die einander gegenüberliegenden und an die Querwand 12 anschließenden Bereiche der Seitenwand 3 jeweils ein Dichtelement 28, 29 aufgesetzt ist, das gleich ausgebildet ist wie das Dichtelement 26 des Dichtringes 25. Die beiden Dichtelemente 28, 29 sind im Bereich zwischen der Querwand 12 und der Schwenkachse 17 vorgesehen.

Die schwenkbaren Wandabschnitte 16 sind an ihren freien Enden ebenfalls mit Dichtelementen 30, 31 versehen, die gleich ausgebildet sind wie das Dichtelement 26 des Dichtringes 25. Die Dichtelemente 30, 31 erstrecken sich über die gesamte Länge des freien Randes der Wandabschnitte 16.

Sämtliche Dichtelemente 26, 28 bis 31 liegen auf gleicher Höhe (Fig. 6), so dass der Unterdruckraum 11 und der Arbeitsraum 15 beim Einsatz der Absaugvorrichtung sicher abgedichtet werden.

Die im Bereich der Schwenkachsen 17 liegenden nicht abgedichteten Bereiche sind so klein, dass sie auf die Absaugwirkung keinen oder einen nur unbedeutenden Einfluss haben.

Anhand von Fig. 6 wird die Funktion der Absaugvorrichtung bei einem Bohrvorgang erläutert.

In den Anschlussstutzen 5 wird das Anschlussstück 8 des Saugschlauches 6 gesteckt und in geeigneter Weise am Anschlussstutzen 5 gesichert. Der Saugschlauch 6 ist an ein (nicht dargestelltes) Sauggerät angeschlossen, das den Saugstrom erzeugt.

Die Absaugvorrichtung wird beispielsweise an eine Wand, in welcher die Bohrung angebracht werden soll, mit dem Dichtring 25 bzw. den Dichtelementen 28 bis 31 angesetzt. Sobald das Sauggerät eingeschaltet wird, wird ein Absaugstrom erzeugt.

Der Anschlussstutzen 5 ist an seinem im Unterdruckraum 11 befindlichen Wandungsteil mit einer Durchströmöffnung 32 versehen, die beispielhaft länglichen Umriss hat (Fig. 3). Über die Durchströmöffnung 32 wird die Luft aus dem Unterdruckraum 11 abgesaugt und dadurch im Unterdruckraum 11 ein Unterdruck erzeugt, der dazu führt, dass die Absaugvorrichtung gegen die Wand gezogen wird. Da die Dichtelemente 26, 28 bis 31 als Hohlprofilteile ausgebildet sind und aus einem elastisch nachgiebigen Material bestehen, werden diese Dichtelemente durch den im Unterdruckraum 11 erzeugten Unterdruck entsprechend elastisch verformt, so dass der zum Halten der Absaugvorrichtung an der Wand erforderliche Unterdruck in ausreichendem Maße aufrechterhalten bleibt, solange das Sauggerät eingeschaltet ist.

Der Bohrer 20 wird durch den Durchgang 19 des Dichtteiles 21 gesteckt, wobei die Zungen 22 des Dichtteiles 21 dichtend am Bohrer 20 anliegen. Mit dem Bohrer 20 wird in der Wand die erforderliche Bohrung gebohrt. Das beim Bohren entstehende Bohrgut 33 wird durch den Saugstrom erfasst und abgesaugt. Der vom Sauggerät erzeugte Saugstrom wirkt über die Öffnung 14 in der Querwand 12 im Arbeitsraum 15, so dass das Bohrgut 33 unmittelbar an der Bohrstelle erfasst und abgesaugt wird. In Fig. 6 sind die entsprechenden Strömungspfeile eingezeichnet, die zeigen, wie das Bohrgut 33 durch den Saugstrom über die Öffnung 14 in den Strömungsraum 4 des Anschlussstutzens 5 und von dort über den Saugschlauch 6 zum Sauggerät gelangt.

Da das Dichtteil 21 den Arbeitsraum 15 nicht luftdicht abdichtet, wird auch aus der Umgebung der Absaugvorrichtung Luft über das Dichtteil 21 mit abgesaugt. Auf diese Weise ist sichergestellt, dass das beim Bohren anfallende Bohrgut 33 vollständig erfasst und abgesaugt wird. Das Bohrgut 33 kann sich dadurch nicht am Mauerwerk absetzen, an dem die Bohrung angebracht wird. Die von außen über das Dichtteil 21 angesaugte Außenluft sorgt zuverlässig dafür, dass das Bohrgut 33 nicht über das Dichtteil 21 nach außen gelangt, sondern von dem Saugstrom erfasst und über den Saugschlauch 6 dem Sauggerät zugeführt wird.

Der im Arbeitsraum 15 entstehende Saugstrom sorgt auch dafür, dass das Bohrgut 33 nicht im Bereich der Schwenkachsen 17 aus dem Gehäuse 1 nach außen gelangen kann. Das Bohrgut 33 wird innerhalb des Arbeitsraumes 15 sofort vom Saugstrom erfasst und über die Öffnung 14 dem Anschlussstutzen 5 zugeführt.

Da die Absaugvorrichtung über den im Unterdruckraum 11 herrschenden Unterdruck fest gegen das Mauerwerk gezogen wird, kann mit ihr auch an senkrechten Wänden gearbeitet werden. Der im Unterdruckraum 11 herrschende Unterdruck sorgt auch in diesem Falle dafür, dass die Absaugvorrichtung fest gegen das Mauerwerk gezogen wird und vom Benutzer des Bohrers 20 nicht von Hand gehalten werden muss. Der Benutzer hat daher beide Hände für den Bohrvorgang frei.

Die beiden Wandabschnitte 16 liegen mit ihren Stirnseiten 18 dicht aneinander, so dass in diesem Bereich das Bohrgut 33 nicht nach außen gelangen kann.

Fig. 7 zeigt die Möglichkeit, die Absaugvorrichtung auch mit Werkzeugen einzusetzen, die während des Bearbeitungsvorganges relativ zur Absaugvorrichtung bewegt werden.

Dargestellt ist ein Schneidwerkzeug 34, das beispielhaft ein Schlitzwerkzeug ist, mit dem im Mauerwerk ein Schlitz 35 erzeugt werden soll. Die Drehachse des Schneidwerkzeuges 34 liegt quer zu den Schwenkachsen 17 der Wandabschnitte 16, im Unterschied zum Bohrwerkzeug mit dem Bohrer 20, dessen Achse parallel zu den Schwenkachsen 17 liegt.

Damit das beim Arbeiten mit dem Schneidwerkzeug 34 anfallende Material 33 von der Absaugvorrichtung erfasst werden kann, werden die beiden Wandabschnitte 16 um die Achsen 17 nach außen geschwenkt. In dieser Arbeitslage (s. auch Fig. 5) erstrecken sich die Wandabschnitte 16 von den Schwenkachsen 17 aus in Richtung auf den Arbeitsbereich des Schneidwerkzeuges 34 aufwärts. Die beiden Wandabschnitte 16 bilden somit Auffangschalen für das Material 33, das durch den vom Sauggerät erzeugten Saugstrom erfasst und durch die Öffnung 14 in der Querwand 12 in den Anschlussstutzen 5 und von dort über den angeschlossenen Saugschlauch 6 zum Sauggerät abtransportiert wird. Die Saugleistung des Sauggerätes ist so eingestellt, dass das Material 33 zuverlässig erfasst und abgesaugt wird.

Da dem Benutzer bekannt ist, wo am Mauerwerk der Schlitz 35 erzeugt werden soll, wird die Absaugvorrichtung so positioniert, dass das beim Arbeitsvorgang anfallende Material 33 im Ansaugbereich der Absaugvorrichtung anfällt.

Der Saugstrom wird so eingestellt, dass das Material 33 nicht durch den Durchgang 19 des Dichtteiles 21 nach außen in die Umgebung gelangt, sondern vom Saugstrom erfasst und abgesaugt wird.

Besonders vorteilhaft ist der Einsatz der Absaugvorrichtung an einer vertikalen Wand. Infolge der beschriebenen Saugwirkung wird die Absaugvorrichtung fest an die vertikale Wand gedrückt, wobei die beiden in der Offenstellung befindlichen Wandabschnitte 16 als Auffangschalen dienen, über die das Material 33 zuverlässig dem geöffneten Arbeitsraum 15 zugeführt wird, in dem das Material 33 in der beschriebenen Weise abgesaugt wird.

Da die beiden Wandabschnitte 16 um etwa 90° aus ihrer Schließstellung (Fig. 4) in die Offenstellung (Fig. 5) geschwenkt werden können, erstrecken sich die Wandabschnitte 16 in der Offenstellung verhältnismäßig weit nach außen, so dass sie einen großen Auffangbereich für das beim Arbeiten mit dem Schneidwerkzeug 34 anfallende Material 33 bieten. Da die Wandabschnitte 16 gekrümmt sind, kann dasjenige Material 33, das nicht sofort vom Saugstrom erfasst wird, sondern auf die Wandabschnitte 16 gelangt, dort in Richtung auf den offenen Arbeitsraum 15 rutschen und dann vom Saugstrom erfasst werden.

Die Offenstellung der Wandabschnitte 16 kann durch unterschiedliche Maßnahmen erreicht werden. Im einfachsten Fall ist die Gelenkverbindung zwischen den Wandabschnitten 16 und dem Gehäuse 1 so gestaltet, dass die Wandabschnitte 16 mit einem Anschlag gegen einen Gegenanschlag gelangen, wodurch die Offenstellung der Wandabschnitte 16 bestimmt ist.

Eine weitere Möglichkeit besteht darin, dass die Wandabschnitte 16 mit Rastelementen versehen sind, die in gehäuseseitige Einrastelemente eingreifen, wenn die Wandabschnitte 16 ihre Offenstellung erreicht haben. Eine solche Rastverbindung hat den Vorteil, dass die Wandabschnitte 16 nicht unbeabsichtigt in Richtung auf ihre Schließstellung zurückschwenken können.

Die Wandabschnitte 16 können in der Offenstellung beispielhaft auch durch Magnetkräfte gehalten werden, indem entsprechende Magnete am Gehäuse 1 oder an den Wandabschnitten 16 vorgesehen sind, die mit entsprechenden magnetischen Teilen des jeweils anderen Teiles zusammenwirken.

Die Absaugvorrichtung ist kompakt ausgebildet und daher insbesondere auch für den Heimwerkerbedarf gut geeignet. Darüber hinaus hat die Absaugvorrichtung nur geringes Gewicht, so dass sie einfach in der Handhabung ist. Der Unterdruckraum 11 kann verhältnismäßig klein ausgebildet sein und dennoch eine hohe Haltekraft infolge des Unterdruckes ermöglichen. Wie Fig. 3 zeigt, ist der Unterdruckraum 11 größer als der Arbeitsraum 15. Die beschriebene divergierende und konvergierende Gestaltung der einander gegenüberliegenden Bereiche der Seitenwand 3 des Gehäuses ermöglicht es, dass trotz der kompakten Gestaltung des Gehäuses 1 ein ausreichend hoher Unterdruck im Unterdruckraum 11 erzeugt werden kann.

Der Dichtring 25 sowie die Dichtelemente 28 bis 31 sind vorteilhaft lösbar mit der Seitenwand 3 bzw. der Querwand 12 verbunden, so dass diese bei Bedarf einfach ausgewechselt werden.

Es können Staubsauger eingesetzt werden, mit denen ein ausreichend hoher Unterdruck und eine ausreichend hohe Luftmenge erzeugt werden kann. Ein ausreichend hoher Unterdruck liegt beispielsweise bei etwa 200 mbar. Eine ausreichend hohe Luftmenge liegt bei etwa 25 l/s. Diese Werte sind nur als Beispielsangaben anzusehen, nicht als beschränkende Werte.

## Patentansprüche

1. Absaugvorrichtung für beim Arbeiten mittels eines Werkzeuges in Mauerwerken und dgl. anfallendes Material, mit wenigstens einem Unterdruckraum (11), wenigstens einem Arbeitsraum (15) und einem Anschluss (5) für eine Saugeinheit, von denen der Arbeitsraum (15) von einer Wandung (3, 12, 16) begrenzt ist,
**dadurch gekennzeichnet, dass** die den Arbeitsraum (15) begrenzende Wandung (3, 12, 16) wenigstens einen Wandabschnitt (16) aufweist, der in eine den Arbeitsraum (15) öffnende Stellung verstellbar ist.

2. Absaugvorrichtung nach Anspruch 1,
**dadurch gekennzeichnet, dass** der Wandabschnitt (16) um eine Achse (17) schwenkbar gelagert ist.

3. Absaugvorrichtung nach Anspruch 1 oder 2,
**dadurch gekennzeichnet, dass** der Wandabschnitt (16) und der Anschluss (5) für die Saugeinheit an einander gegenüberliegenden Seiten eines Gehäuses (1) der Absaugvorrichtung angeordnet sind.

4. Absaugvorrichtung nach einem der Ansprüche 1 bis 3,
**dadurch gekennzeichnet, dass** zwischen dem Unterdruckraum (11) und dem Arbeitsraum (15) eine Querwand (12) angeordnet ist, in der sich wenigstens eine Öffnung (14) befindet, die den Arbeitsraum (15) mit dem Anschluss (5) verbindet.

5. Absaugvorrichtung nach einem der Ansprüche 1 bis 4,
**dadurch gekennzeichnet, dass** der verstellbare Wandabschnitt (16) der Querwand (12) gegenüberliegt, bezogen auf die Längsrichtung des Gehäuses (1).

6. Absaugvorrichtung nach einem der Ansprüche 1 bis 5,
**dadurch gekennzeichnet, dass** die den Arbeitsraum (15) begrenzende Wandung (3, 12, 16) zwei gegensinnig verstellbare Wandabschnitte (16) aufweist.

7. Absaugvorrichtung nach Anspruch 6,
**dadurch gekennzeichnet, dass** die beiden Wandabschnitte (16) gegensinnig zueinander um jeweils eine Achse (17) schwenkbar sind.

8. Absaugvorrichtung nach einem der Ansprüche 1 bis 7,
**dadurch gekennzeichnet, dass** der Wandabschnitt (16) über seine Länge gekrümmt ausgebildet ist.

9. Absaugvorrichtung nach einem der Ansprüche 1 bis 8,
**dadurch gekennzeichnet, dass** der Wandabschnitt (16) mit einem Seitenrand schwenkbar gelagert ist.

10. Absaugvorrichtung nach einem der Ansprüche 6 bis 9,
**dadurch gekennzeichnet, dass** die beiden Wandabschnitte (16) in ihrer den Arbeitsraum (15) schließenden Stellung mit ihren Stirnseiten (18) aneinander liegen.

11. Absaugvorrichtung nach einem der Ansprüche 1 bis 10,
**dadurch gekennzeichnet, dass** der Arbeitsraum (15) und der Unterdruckraum (11) an der Unterseite des Gehäuses (1) offen sind.

12. Absaugvorrichtung nach einem der Ansprüche 1 bis 11,
**dadurch gekennzeichnet, dass** den Arbeitsraum (15) und den Unterdruckraum (11) begrenzende Seitenwände (3, 12, 16) am freien Rand mit Dichtelementen (26, 28 bis 31) versehen sind.

13. Absaugvorrichtung nach einem der Ansprüche 1 bis 12,
**dadurch gekennzeichnet, dass** das Gehäuse (1) spiegelsymmetrisch zu seiner Längsmittelebene (13) ausgebildet ist.

14. Absaugvorrichtung nach einem der Ansprüche 1 bis 13,
**dadurch gekennzeichnet, dass** der Anschluss (5) über wenigstens eine Öffnung (32) mit dem Unterdruckraum (11) verbunden ist.
